# EUROPÄISCHE PATENTSCHRIFT

(11) **EP 3 215 759 B1**
(45) Veröffentlichungstag und Bekanntmachung des Hinweises auf die Patenterteilung: **09.01.2019**
(21) Anmeldenummer: 15795130.2
(22) Anmeldetag: 03.11.2015
(51) Int. Cl.: F16G 13/06

(54) **ROLLENKETTE**
ROLLER CHAIN
CHAÎNE À ROULEAUX

(30) Priorität: 04.11.2014 DE 202014105286 U
(43) Veröffentlichungstag der Anmeldung: 13.09.2017
(73) Patentinhaber: Renold GmbH, 37574 Einbeck (DE)
(72) Erfinder: LÜDECKE, Steffen, 37181 Hardegsen (DE); KREIPE, Hans-Jürgen, 33181 Bad Wünnenberg (DE)
(74) Vertreter: Pfenning, Meinig & Partner mbB
(86) Internationale Anmeldenummer: PCT/EP2015/075627
(87) Internationale Veröffentlichungsnummer: WO 2016/071354

(56) Entgegenhaltungen:
- WO-A2-2004/099041
- DE-B1- 2 923 532
- DE-U1-202005 008 582

## Beschreibung

Die Erfindung betrifft eine Rollenkette mit Bolzen, Buchsen, Rollen, Innenlaschen und Außenlaschen nach dem Oberbegriff des Anspruchs 1.

Derartige, häufig für Antriebe genutzte Ketten sind dort, wo Oberflächen gleitend aufeinander gelagert sind, also insbesondere auf Innenseiten der Buchsen und daran anliegenden äußeren Oberflächen der Bolzen, hohem Verschleiß ausgesetzt. Um den Verschleiß in Grenzen zu halten, ist an den genannten Stellen üblicherweise eine gute Schmierung vorgesehen. Eine unzureichende Schmierung führt jedoch normalerweise zu einer raschen Beschädigung oder Zerstörung der Kette und darüber hinaus zu drastischen Energieverlusten.

Um die Anfälligkeit derartiger Ketten für Beschädigungen auch bei ungenügender Schmierung zu verringern, ist es nach dem Stand der Technik bekannt, die Bolzen und/oder die Buchsen mit Nitriden zu beschichten. Auch diese bekannten Ketten haben jedoch den Nachteil, dass der bei einem Trockenlauf der Kette mangels ausreichender Schmierung zumindest an einer von jeweils aufeinander gleitenden Oberflächen auftretende Verschleiß über ein angestrebt kleines Maß hinausgeht.

Darüber hinaus wird eine hohe Korrosionsbeständigkeit der Kettenteile angestrebt. Diese ist bei mit Chrom legierten austenitischen Stählen gegeben. Jedoch weist dieses Material keine ausreichende Härte auf, um die gewünschte Verschleißfestigkeit zu erhalten. Wird die Oberfläche des austinischen Stahls durch eines der bekannten Nitrierverfahren wie Gasnitrieren, Plasmanitrieren oder Impulsplasmanitrieren gehärtet, dann bildet sich eine Chromnitrid enthaltende Randschicht, die zwar die gewünschte Härte und damit Verschleißfestigkeit besitzt, deren Korrosionsbeständigkeit jedoch beträchtlich verringert wurde.

Aus der DE 20 2005 008 582 U1 ist eine gattungsgemäße Rollenkette bekannt, bei der die Bolzen aus austenitischem rostfreiem Stahl bestehen und ihre Oberflächenschicht durch eine durch Nitrieren erhaltene S-Phase des austenitischen Stahls gebildet ist. Hierdurch enthält die Randschicht der Bolzen kein die Korrosionsbeständigkeit der Oberfläche herabsetzendes Chromnitrid. Die S-Phase des austenitischen Stahls, die auch als "expanded austenite" bezeichnet wird, stellt eine feste Lösung von Stickstoff im austenitischen Stahl dar. Das ursprüngliche Austenitgitter ist durch Einbringung des Stickstoffs aufgeweitet.

Die Bildung von Chromnitrid findet statt, wenn das Nitrieren bei einer Temperatur oberhalb 500°C erfolgt. Die üblichen Nitrierverfahren arbeiten in diesem Temperaturbereich, da bei niedrigeren Temperaturen das Eindiffundieren von Stickstoff in den austenitischen Stahl extrem langsam ist, so dass eine die Bildung von Chromnitrid ausschließende Verfahrenstemperatur von weniger als 400°C aus wirtschaftlichen Gründen nicht vertretbar ist. Ein in wirtschaftlicher Hinsicht gangbarer Weg ist jedoch die Implantation von Stickstoff, die bei Temperaturen unterhalb von 400°C und mit ausreichender Geschwindigkeit durchgeführt werden kann.

Durch diesen Nitriervorgang kann die Oberflächenhärte beispielsweise von 400 bis 500 HV auf etwa 900 bis 1000 HV angehoben werden, während die Korrosionsbeständigkeit des austenitischen Stahls praktisch nicht beeinträchtigt wird.

Es hat sich jedoch herausgestellt, dass zwischen in gegenseitigem Reibeingriff stehenden Komponenten einer Rollenkette, wie einem Bolzen oder einer Buchse oder einer Buchse und einer Rolle, wenn diese aus gleichem Material bestehen, beispielsweise jeweils aus austenitischem Stahl oder jeweils aus ferritischem Stahl mit gegebenenfalls einer Nitrierung, die gewünschte Verschleißfestigkeit dennoch häufig nicht erhalten wird.

Es ist daher die Aufgabe der vorliegenden Erfindung eine Rollenkette mit Bolzen, Buchsen, Rollen, Innenlaschen und Außenlaschen, bei der jeweils zwei Buchsen durch mindestens zwei Innenlaschen miteinander verbunden sind und dadurch ein Kettenglied bilden, wobei auf jeder Buchse eine die Buchse umfassende Rolle drehbar gelagert ist und wobei jeweils zwei aufeinanderfolgende Kettenglieder dadurch gelenkig miteinander verbunden sind, dass jede Buchse auf einem an den beiden Enden der Buchse über diese hinausragenden Bolzen sitzt und zwei so von zwei aufeinanderfolgenden Kettengliedern umfasste Bolzen zumindest durch zwei Außenlaschen verbunden sind, zu schaffen, bei der die in jeweiligem Reibeingriff stehenden Komponenten eine hohe Verschleißfestigkeit haben.

Diese Aufgabe wird erfindungsgemäß durch eine Rollenkette mit den Merkmalen des Anspruchs 1 gelöst. Vorteilhafte Weiterbildungen der erfindungsgemäßen Rollenkette ergeben sich aus den Unteransprüchen.

Erfindungsgemäß besteht bei zumindest einer der jeweils aus den beiden in gegenseitigem Reibeingriff befindlichen Komponenten Bolzen und Buchse einerseits sowie Buchse und Rolle andererseits bestehenden Kombinationen jeweils die eine Komponente aus austenitischem rostfreiem Stahl mit einer zumindest an der Oberfläche durch Nitrieren bei einer Temperatur zwischen 400°C und 500°C gebildeten S-Phase, und die andere Komponente besteht aus einem rostfreiem ferritischen Stahl, der zumindest an der Oberflächen bei einer Temperatur zwischen 1000°C und 1200°C nitriert wurde.

Es wurde überraschenderweise gefunden, dass bei einer derartigen Kombination von aneinanderreibenden Materialien die Verschleißfestigkeit bedeutend höher ist als bei Verwendung identischer Materialien, beispielsweise jeweils aus austenitischem Stahl, der bei einer Temperatur zwischen 400°C und 500°C nitriert wurde, oder jeweils aus ferritischem Stahl, der bei einer Temperatur zwischen 1000°C und 1200°C nitriert wurde.

Ferritische rostfreie Stähle lassen sich bei Temperaturen oberhalb 950°C nitrieren, wodurch eine Härte von bis zu 600 HV erhalten und gleichzeitig eine erhöhte Kernhärte erzeugt werden können. Diese bietet eine ausreichende Grundfestigkeit, um die gebildete harte Außenschicht zu unterstützen.

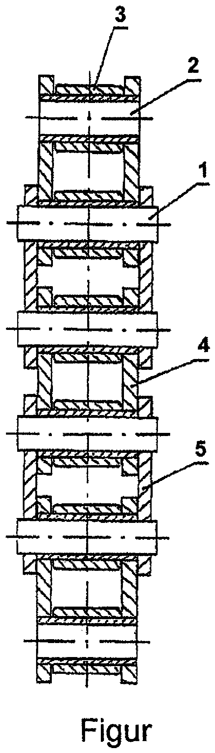

Ein Ausführungsbeispiel der Erfindung wird im Folgenden anhand der Figur erläutert, die einen Längsschnitt durch einen Abschnitt einer Rollenkette zeigt.

Die in der Figur abgebildete Rollenkette besteht aus Bolzen 1, Buchsen 2, Rollen 3, Innenlaschen 4 und Außenlaschen 5. Jeweils zwei Buchsen 2 sind durch zwei mit diesen Buchsen 2 fest verbundene Innenlaschen 4 miteinander verbunden und bilden mit diesen beiden Innentaschen 4 ein Kettenglied, wobei auf jeder Buchse 2 eine die Buchse 2 umfassende Rolle 3 drehbar gelagert ist. Jeweils zwei aufeinanderfolgende Kettenglieder dieser Art sind dadurch gelenkig miteinander verbunden, dass jede Buchse 2 auf einem an den beiden Enden dieser Buchse 2 über diese hinausragenden Bolzen 1 sitzt und zwei so von zwei aufeinanderfolgenden Kettengliedern umfasste Bolzen 1 durch zwei Außenlaschen 5 verbunden sind, wobei die zwei Enden jedes Bolzens mit jeweils einer Außenlasche 5 verbunden sind. Erfindungsgemäß bestehen die Bolzen 1 aus austenitischem rostfreiem Stahl mit einer zumindest an der Oberfläche durch Nitrieren bei einer Temperatur zwischen 400°C und 500°C gebildeten S-Phase und die Buchsen 2 aus einem rostfreien ferritischen Stahl, der zumindest an der Oberfläche bei einer Temperatur zwischen 1000°C und 1200°C nitriert wurde, oder umgekehrt die Buchsen 2 aus austenitischem rostfreien Stahl mit einer zumindest an der Oberfläche durch Nitrieren bei einer Temperatur zwischen 400°C und 500°C gebildeten S-Phase und die Bolzen 1 aus einem rostfreien ferritischen Stahl, der zumindest an der Oberfläche bei einer Temperatur zwischen 1000°C und 1200°C nitriert wurde. Weiterhin bestehen die Buchsen 2 aus austenitischem rostfreien Stahl mit einer zumindest an der Oberfläche durch Nitrieren bei einer Temperatur zwischen 400°C und 500°C gebildeten S-Phase und die Rollen 3 aus einem rostfreien ferritischen Stahl, der zumindest an der Oberfläche bei einer Temperatur zwischen 1000°C und 1200°C nitriert wurde, oder umgekehrt. Es ist jedoch auch möglich, dass nur die Kombination aus Bolzen und Buchse oder nur die Kombination aus Buchse und Rolle in der vorgenannten Weise ausgebildet ist.

## Patentansprüche

1. Rollenkette mit Bolzen (1), Buchsen (2), Rollen (3), Innenlaschen (4) sowie Außenlaschen (5), bei der jeweils zwei Buchsen (2) durch mindestens zwei Innenlaschen (4) miteinander verbunden sind und dadurch ein Kettenglied bilden, wobei auf jeder Buchse (2) eine die Buchse (2) umfassende Rolle (3) drehbar gelagert ist und wobei jeweils zwei aufeinanderfolgende Kettenglieder dadurch gelenkig miteinander verbunden sind, dass jede Buchse (2) auf einem an den beiden Enden der Buchse (2) über diese hinausragenden Bolzen (1) sitzt und zwei so von aufeinanderfolgenden Kettengliedern umfasste Bolzen (1) zumindest durch zwei Außenlaschen (5) verbunden sind,
**dadurch gekennzeichnet, dass**
bei zumindest einer der jeweils aus den beiden in gegenseitigem Reibeingriff befindlichen Komponenten Bolzen (1) und Buchse (2) einerseits sowie Buchse (2) und Rolle (3) andererseits bestehenden Kombinationen jeweils die eine Komponente aus austenitischem rostfreien Stahl mit einer zumindest an der Oberfläche durch Nitrieren bei einer Temperatur zwischen 400°C und 500°C gebildeten S-Phase besteht und die andere Komponente aus einem rostfreien ferritischen Stahl, der zumindest an der Oberfläche bei einer Temperatur zwischen 1000°C und 1200°C nitriert wurde, besteht.

2. Rollenkette nach Anspruch 1, **dadurch gekennzeichnet, dass** die Buchse aus austenitischem Stahl und der Bolzen (1) und die Rolle (3) jeweils aus ferritischem Stahl bestehen.

3. Rollenkette nach Anspruch 1, **dadurch gekennzeichnet, dass** die Buchse (2) aus ferritischem Stahl und der Bolzen (1) und die Rolle (3) jeweils aus austenitischem Stahl bestehen.

## Claims

1. A roller chain with pins (1), bushings (2), rollers (3), inner plates (4) as well as outer plates (5), wherein two bushings (2) are connected to one another in each case by way of at least two inner plates (4) and by way of this form a chain link, wherein a roller (3) encompassing the bushing (2) is rotatably mounted on each bushing (2) and wherein two consecutive chain links are articulately connected to one another in each case by way of each bushing (2) being seated on a pin (1) which projects beyond the bushing (2) at both ends of this bushing (2) and two pins (1) which are thus encompassed by consecutive chain links being connected at least by way of two outer plates (5),
**characterised in that** in at least one of the combinations which consist of two mutually frictionally engaged components - the pin (1) and bushing (2) on the one hand, the bushing (2) and roller (3) on the other hand - in each case the one component consists of austenitic stainless steel with an S-phase which is formed at least on the surface by way of nitriding at a temperature between 400°C and 500°C, and the other component consists of a stainless ferritic steel which at least on the surface is nitrided at a temperature between 1000°C and 1200°C.

2. A roller chain according to claim 1, **characterised in that** the bushing consists of austenitic steel, and the pin (1) and the roller (3) in each case consist of ferritic steel.

3. A roller chain according to claim 1, **characterised in that** the bushing (2) consists of ferritic steel, and the pin (1) and the roller (3) in each case consist of austenitic steel.

## Revendications

1. Chaîne à rouleaux avec des goujons (1), des manchons (2), des rouleaux (3), des languettes intérieures (4), ainsi que des languettes extérieures (5), dans laquelle respectivement deux manchons (2) sont reliés ensemble par au moins deux languettes intérieures (4) et forment de ce fait un élément de chaîne, où un rouleau (3) comprenant le manchon (2) est disposé en pouvant être mis en rotation sur chaque manchon (2) et où respectivement deux éléments de chaîne successifs sont ainsi reliés ensemble de manière articulée de sorte que chaque manchon (2) repose sur un goujon (1) dépassant au dessus du manchon (2) au niveau de ses deux extrémités, et deux parmi les goujons (1) compris par des éléments de chaîne se succédant ainsi sont reliés par au moins deux languettes extérieures (5),
**caractérisée en ce que**,
pour au moins une des combinaisons respectives constituées des deux composants goujon (1) et manchon (2) se trouvant en prise par friction réciproque, d'une part, ainsi que des deux comparants manchon (2) et rouleau (3)se trouvent en prise par friction réciproque, d'autre part, l'un des composants respectifs est constitué d'acier austénitique inoxydable avec une phase S formée à la surface par nitration à une température entre 400 °C et 500 °C et l'autre composant est constitué d'acier ferritique inoxydable qui a été nitré au moins en surface à une température entre 1000 °C et 1200 °C.

2. Chaîne à rouleaux selon la revendication 1, **caractérisée en ce que** le manchon est constitué d'acier austénitique, et le goujon (1) et le rouleau (3) sont constitués respectivement d'acier ferritique.

3. Chaîne à rouleaux selon la revendication 1, **caractérisée en ce que** le manchon (2) est constitué d'acier ferritique, et le goujon (1) et le rouleau (3) sont respectivement constitués d'acier austénitique.
